# EUROPEAN PATENT SPECIFICATION

(11) **EP 2 221 464 B1**
(45) Date of publication and mention of the grant of the patent: **28.12.2011**
(21) Application number: 10153591.2
(22) Date of filing: 15.02.2010
(51) Int. Cl.: F02D 21/08, F02D 41/00, F02M 25/07

(54) **Control unit for internal combustion engine**
Steuerungseinheit für Verbrennungsmotor
Unité de contrôle pour moteur à combustion interne

(30) Priority: 18.02.2009 JP 2009035485
(43) Date of publication of application: 25.08.2010
(73) Proprietor: Toyota Jidosha Kabushiki Kaisha, Toyota-shi, Aichi-ken, 471-8571 (JP)
(72) Inventor: Nakajima, Toshiaki, Toyota-shi, Aichi-ken 471-8571 (JP)
(74) Representative: Intès, Didier Gérard André

(56) References cited:
- JP-A- 2002 227 727
- JP-A- 2006 274 961
- US-A1- 2003 192 516
- US-A1- 2005 066 659
- US-A1- 2008 035 126

## Description

### BACKGROUND OF THE INVENTION

### 1. Field of the Invention

The invention relates to a control unit for an internal combustion engine that includes an EGR system formed of an EGR passage for introducing exhaust gas from an exhaust passage into an intake passage and an EGR valve that is provided in the EGR passage and that is able to vary the flow passage area of exhaust gas.

### 2. Description of the Related Art

A control unit for an internal combustion engine is, for example, described in Japanese Patent Application Publication No. 2002-227727 (JP-A-2002-227727). The internal combustion engine, which is a control target of such a control unit, includes an EGR passage and an EGR valve. The EGR passage is used for introducing exhaust gas from an exhaust passage into an intake passage. The EGR valve is provided in the EGR passage and is able to vary the flow passage area of exhaust gas. Then, the flow rate of exhaust gas introduced into the intake passage is adjusted through opening degree control over the EGR valve on the basis of an engine operating state to thereby reduce nitrogen oxides (NOx) contained in exhaust gas.

In the above internal combustion engine, there may occur a problem that, during stop of engine operation, water adherent to a valve element of the EGR valve freezes to cause the EGR valve to be stuck. When the EGR valve is frozen and stuck, there is a possibility that opening degree control over the EGR valve cannot be performed during the next engine operation. Therefore, there is a possibility that nitrogen oxides (NOx) contained in exhaust gas cannot be reduced.

Then, for example, in order to suppress the degree to which the EGR valve is frozen and stuck, it is conceivable that, during stop of engine operation, the EGR valve is forcibly opened and closed to cause water adherent to the EGR valve to fly off to thereby reduce the amount of water adherent to the EGR valve.

Incidentally, in the above control unit, the EGR valve is forcibly opened and closed each time engine operation is stopped. This causes a new problem that an abnormality, such as abrasion, tends to occur in the EGR valve.

Note that the above problem not only occurs in the configuration that the EGR valve is forcibly opened and closed but also substantially commonly occurs in the configuration that includes reduction processing means that performs process for reducing the amount of water adherent to the EGR valve, such as a configuration that heats the EGR valve.

### SUMMARY OF THE INVENTION

The invention provides a control unit for an internal combustion engine, which is able to accurately prevent sticking of an EGR valve due to freezing.

A first aspect of the invention provides a control unit for an internal combustion engine that includes an EGR system formed of an EGR passage for introducing exhaust gas from an exhaust passage into an intake passage and an EGR valve that is provided in the EGR passage and that is able to vary the flow passage area of exhaust gas. The control unit includes reduction process execution means that executes reduction process for reducing an amount of water adherent to the EGR valve at the time of stop of engine operation on the basis of an engine operating state prior to stop of engine operation.

In the first aspect, the control unit may further include estimating means that estimates whether liquid-phase water is adherent to the EGR valve on the basis of the engine operating state, wherein the reduction process execution means may execute the reduction process when the estimating means estimates that liquid-phase water is adherent to the EGR valve.

With the above configuration, at the time of stop of engine operation, the reduction process for reducing the amount of water adherent to the EGR valve is not always executed, but the reduction process is executed when it is estimated that liquid-phase water is adherent to the EGR valve. This can prevent the reduction process from being unnecessarily executed. Thus, it is possible to accurately suppress freezing and sticking of the EGR valve.

In the above configuration, the estimating means may estimate a partial pressure of water in the vicinity of the EGR valve and a temperature in the vicinity of the EGR valve, and may estimate that liquid-phase water is adherent to the EGR valve when the partial pressure of water exceeds a saturated vapor pressure at the estimated temperature. In this case, it is possible to accurately estimate whether liquid-phase water is adherent to the EGR valve, and it is possible to further accurately suppress freezing and sticking of the EGR valve.

In addition, in the above configuration, the estimating means may estimate a pressure of exhaust gas in the vicinity of the EGR valve, may estimate a volume ratio of water in exhaust gas on the basis of an intake air flow rate and fuel injection flow rate of the internal combustion engine, and may estimate the partial pressure of water in the vicinity of the EGR valve on the basis of the pressure of exhaust gas and the volume ratio of water in the exhaust gas.

In the above configuration, when the estimating means estimates that liquid-phase water is adherent to the EGR valve, the estimating means may further estimate the amount of the adherent water on the basis of the engine operating state, the reduction process execution means may set an execution mode of the reduction process on the basis of the amount of the adherent water estimated by the estimating means.

When liquid-phase water is adherent to the EGR valve, it becomes difficult to reduce the adherent liquid-phase water as the amount of the adherent water is large. In terms of this point, with the above configuration, it is possible to accurately set the execution mode of the reduction process on the basis of the amount of water adherent to the EGR valve, and it is possible to further accurately prevent freezing and sticking of the EGR valve.

In the above configuration, the estimating means may estimate a flow rate of exhaust gas introduced into the intake passage through the EGR valve, and may estimate that the amount of the adherent water is larger as the flow rate of exhaust gas increases.

In the above configuration, when the amount of the adherent water estimated by the estimating means is smaller than a predetermined amount, the reduction process execution means may prohibit execution of the reduction process.

Even when liquid-phase water is adherent to the EGR valve, but when the amount of the adherent water is relatively small, the degree of freezing and sticking of the EGR valve is small. In this case, ice may be crushed by driving force of the actuator of the EGR valve at the start of the next engine operation, so opening degree control over the EGR valve may be performed. When the reduction process is executed until the above situation, there is a possibility that various problems, such as abnormality of abrasion, or the like, occurs in the EGR valve because of execution of the above process.

On the other hand, with the above configuration, when it is estimated that liquid-phase water is present in the vicinity of the EGR valve, the reduction process is not executed only by this fact, but execution of the reduction process is prohibited when the amount of the adherent water in the EGR valve is smaller than or equal to a predetermined amount. This further prevents the reduction process from being unnecessarily executed. Thus, it is possible to further accurately prevent freezing and sticking of the EGR valve.

In the above configuration, the reduction process execution means may forcibly open and close the EGR valve, and may increase a forcible driving duration of the EGR valve as the amount of the adherent water estimated by the estimating means increases.

In addition, in the above configuration, the reduction process execution means may forcibly open and close the EGR valve, and may increase a forcible driving speed of the EGR valve as the amount of the adherent water estimated by the estimating means increases.

In the first aspect, an execution mode of the reduction process may be changed on the basis of the engine operating state prior to stop of the engine operation.

In addition, in the above configuration, execution of the reduction process may be prohibited on the basis of the engine operating state prior to stop of the engine operation.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a schematic configuration diagram that shows the schematic configuration of a control unit for an internal combustion engine according to a first embodiment of the invention;
FIG. 2 is a flowchart that shows the procedure of adherent liquid moisture calculation control according to the first embodiment;
FIG. 3 is a map corresponding to the phase diagram of water, and is a map that represents the relationship among a temperature Tw and pressure Pw of the water and a phase of the water (any one of solid, liquid, and gas);
FIG. 4 is a flowchart that shows the procedure of forcible drive control over an EGR valve according to the first embodiment;
FIG. 5 is a flowchart that shows the procedure of forcible drive control over an EGR valve in a control unit for an internal combustion engine according to a second embodiment of the invention; and
FIG. 6 is a map that defines the relationship between an amount of adherent liquid moisture and a forcible drive duration of the EGR valve according to the second embodiment.

### DETAILED DESCRIPTION OF EMBODIMENTS

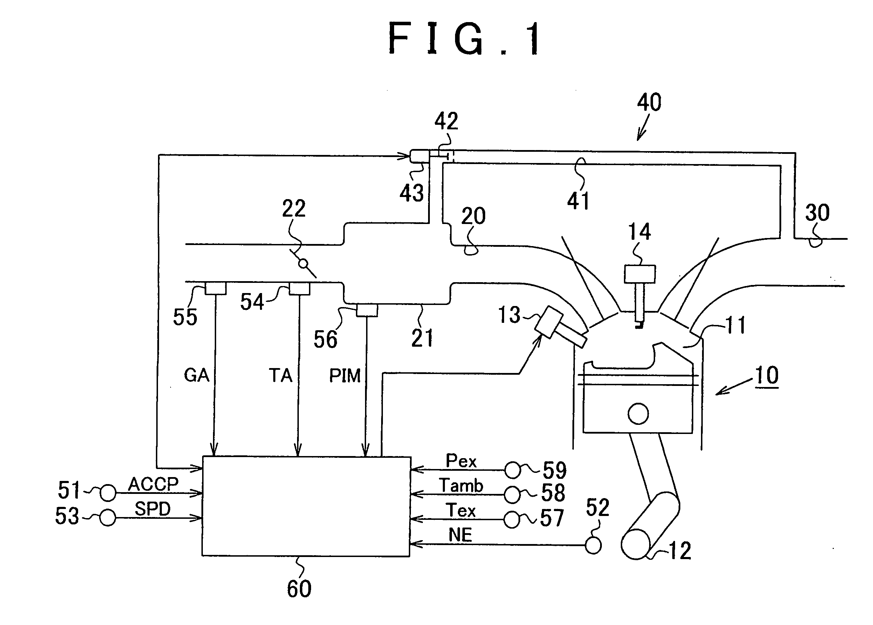

[First Embodiment] Hereinafter, a control unit for a vehicle-mounted internal combustion engine, which is a first embodiment of a control unit for an internal combustion engine according to the invention, will be described with reference to FIG. 1 to FIG. 4.

FIG. 1 shows the schematic configuration of an internal combustion engine 10 and an electronic control unit 60 that controls the internal combustion engine 10. An intake passage 20 is connected to a combustion chamber 11 of the internal combustion engine 10, and intake air is supplied to the combustion chamber 11 via the intake passage 20. A surge tank 21 is provided midway of the intake passage 20. A throttle valve 22 is provided upstream of the surge tank 21 to regulate the flow rate of intake air. The internal combustion engine 10 has a fuel injection valve 13 for directly injecting fuel into the combustion chamber 11. The internal combustion engine 10 has an ignition plug 14 for spark igniting a mixture of intake air and fuel. In addition, an exhaust passage 30 is connected to the combustion chamber 11.

In the above configuration, intake air supplied through the intake passage 20 and fuel injected and supplied from the fuel injection valve 13 are mixed in the combustion chamber 11, and the thus mixed air-fuel mixture is subjected to combustion in the combustion chamber 11. Then, a crankshaft 12 is driven for rotation by expansion energy caused by the combustion. In addition, exhaust gas generated by combustion in the combustion chamber 11 is exhausted outside through the exhaust passage 30.

In addition, the internal combustion engine 10 is equipped with an EGR system 40 for introducing part of exhaust gas, exhausted from the combustion chamber 11 to the exhaust passage 30, into the intake passage 20. The EGR system 40 includes an EGR passage 41, an EGR valve 42 and a step motor 43. The EGR passage 41 provides fluid communication between the surge tank 21 and the exhaust passage 30. The EGR valve 42 is provided in the EGR passage 41 and is able to vary the flow passage area of exhaust gas. The step motor 43 is used to open and close the EGR valve 42. Then, when the opening degree of the EGR valve 42 is varied by controlling the operation of the step motor 43, the flow rate of exhaust gas (hereinafter, "EGR flow rate") introduced into the surge tank 21 through the EGR passage 41 is regulated. Note that the EGR valve 42 according to the present embodiment is of a poppet type.

In addition, the internal combustion engine 10 has various sensors for detecting the operating state thereof. That is, the internal combustion engine 10 has an accelerator operation amount sensor 51, an engine rotational speed sensor 52, and a vehicle speed sensor 53. The accelerator operation amount sensor 51 detects the depression amount of an accelerator pedal (hereinafter, "accelerator operation amount ACCP"). The engine rotational speed sensor 52 detects the engine rotational speed NE on the basis of the rotation of the crankshaft 12 of the internal combustion engine 10. The vehicle speed sensor 53 detects the traveling speed of the vehicle (hereinafter, "vehicle speed SPD"). In addition, the internal combustion engine 10 has a throttle opening degree sensor 54 and an intake air flow rate sensor 55. The throttle opening degree sensor 54 detects the opening degree of the throttle valve 22 (hereinafter, "throttle opening degree TA"). The intake air flow rate sensor 55 detects the intake air flow rate GA. In addition, the internal combustion engine 10 has an intake pipe pressure sensor 56 and an exhaust temperature sensor 57. The intake pipe pressure sensor 56 detects the pressure of intake air in the surge tank 21 (hereinafter, "intake pipe pressure PIM"). The exhaust temperature sensor 57 detects the temperature Tex of exhaust gas. In addition, the internal combustion engine 10 has an ambient air temperature sensor 58. The ambient air temperature sensor 58 detects the ambient air temperature Tamb. In addition, the internal combustion engine 10 has an exhaust gas pressure sensor 59. The exhaust gas pressure sensor 59 detects the pressure Pex of exhaust gas. Note that the internal combustion engine 10, where necessary, has various sensors, such as an ignition switch (hereinafter, "I/G switch"), other the above sensors. Signals detected by these sensors 51 to 59 are input to the electronic control unit 60 that executes various controls over the internal combustion engine 10.

The electronic control unit 60 includes a memory that stores programs and computing maps for executing various controls and various pieces of data calculated when controls are executed. Then, the electronic control unit 60, for example, executes the following controls on the basis of the operating state, and the like, of the internal combustion engine 10 determined from output values of various sensors including the sensors 51 to 59. That is, the electronic control unit 60 executes throttle control in which a target throttle opening degree is calculated on the basis of the accelerator operation amount ACCP required by a driver, and the throttle valve 22 is controlled on the basis of the target throttle opening degree. In addition, the electronic control unit 60 executes fuel injection control in which a target fuel injection flow rate Q is calculated on the basis of the engine rotational speed NE, the intake air flow rate GA, and the like, and the fuel injection valve 13 is controlled on the basis of the target fuel injection flow rate Q. In addition, the electronic control unit 60 executes EGR control in which a target EGR opening degree is calculated on the basis of the engine rotational speed NE, the intake air flow rate GA, and the like, and the step motor 43 is controlled on the basis of the target EGR opening degree.

Incidentally, in the above internal combustion engine 10, there may occur a problem that, during stop of engine operation, water adherent to the valve element of the EGR valve 42 is frozen to cause the EGR valve 42 to be stuck. When the EGR valve 42 is frozen and stuck, it may be difficult to control the opening degree of the EGR valve 42 during the next engine operation, and there is a possibility that it is difficult to reduce NOx contained in exhaust gas.

Then, for example, in order to reduce the degree to which the EGR valve 42 is frozen and stuck, it is conceivable that, during stop of engine operation, the EGR valve 42 is forcibly opened and closed to cause water adherent to the EGR valve 42 to fly off to thereby reduce the amount of water adherent to the EGR valve 42.

However, in this case, there is a new problem that abnormality of abrasion, or the like, tends to occur in the EGR valve 42 because forcible driving process of the EGR valve 42 is carried out each time the engine operation is stopped.

Then, in the present embodiment, the electronic control unit 60 estimates whether liquid-phase water is adherent to the EGR valve 42 on the basis of the engine operating state. Then, when the electronic control unit 60 estimates that liquid-phase water is adherent to the EGR valve 42 at the time of stop of engine operation, the EGR valve 42 is forcibly opened and closed. This prevents forcible driving process of the EGR valve 42 from being unnecessarily executed.

However, even when liquid-phase water is adherent to the EGR valve 42, but when the amount of adherent water is relatively small, the degree to which the EGR valve 42 is frozen and stuck is small. In this case, ice may be crushed by driving force of the step motor 43 at the start of the next engine operation, so opening degree control over the EGR valve 42 may be performed. When forcible driving process of the EGR valve 42 is executed in the above situation, it is difficult to accurately prevent a problem that abnormality of abrasion, or the like, occurs in the EGR valve 42 because of execution of the forcible driving process.

Then, in the present embodiment, when the electronic control unit 60 estimates that liquid-phase water is adherent to the EGR valve 42, the electronic control unit 60 further estimates the amount Vw of adherent water on the basis of the engine operating state. Then, a mode in which forcible driving process of the EGR valve 42 is executed is set on the basis of the estimated amount Vw of adherent water. Specifically, when the estimated amount Vw of adherent water is smaller than or equal to a predetermined amount A1, execution of forcible driving process of the EGR valve 42 is prohibited. This further prevents forcible driving process of the EGR valve 42 from being unnecessarily executed. Note that the predetermined amount A1 is a fixed value set through experiment in advance, and is set in consideration of the structure of the EGR valve 42, the driving force of the step motor 42, and the like.

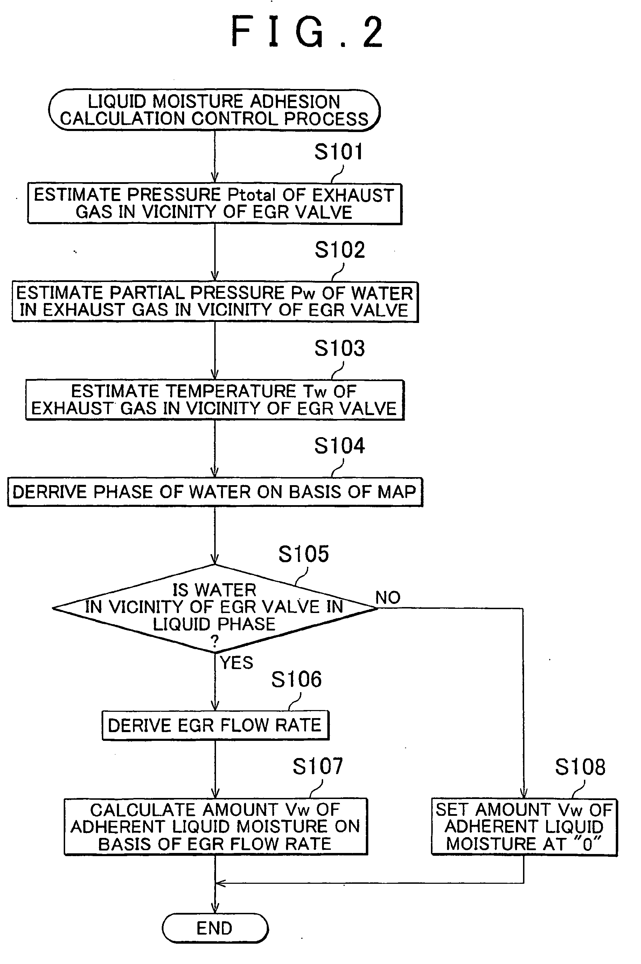

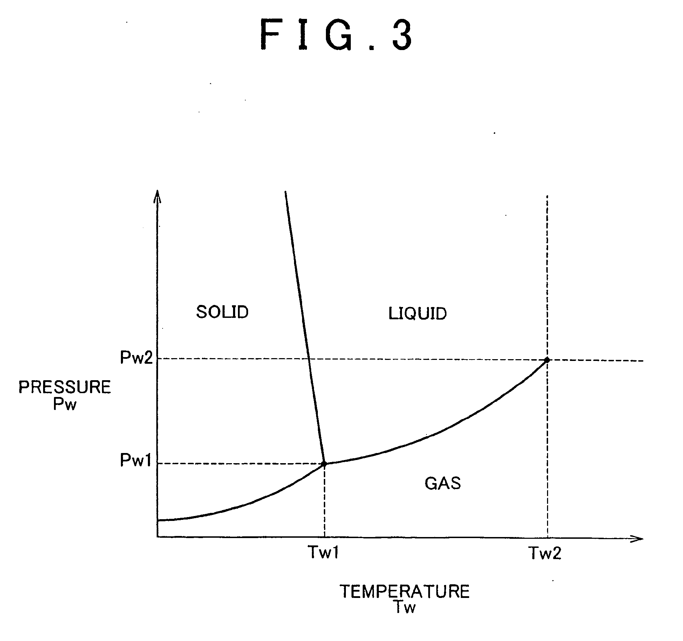

Next, liquid moisture adhesion calculation control according to the present embodiment will be described with reference to FIG. 2 and FIG. 3. FIG. 2 is a flowchart that shows the procedure of liquid moisture adhesion calculation control. A series of processes shown in the flowchart is repeatedly executed by the electronic control unit 60 during operation of the internal combustion engine 10. In addition, FIG. 3 is a map corresponding to the phase diagram of water, and is a map that represents the relationship among a temperature Tw and pressure Pw of the water and a phase of the water (any one of solid, liquid, and gas).

As shown in FIG 2, in this process, first, the pressure Ptotal of exhaust gas in the vicinity of the EGR valve 42 is estimated (step S101). Here, in addition, the pressure Ptotal of exhaust gas in the EGR passage 41 in the vicinity of the EGR valve 42 is estimated on the basis of the intake pipe pressure PIM, the exhaust gas pressure Pex and the target EGR opening degree of the EGR valve 42. Subsequently, the partial pressure Pw of water in exhaust gas in the vicinity of the EGR valve 42 is estimated (step S102). Here, first, the volume ratio Rw of water in exhaust gas is estimated on the basis of the intake air flow rate GA and the target fuel injection flow rate Q at that time. After that, the pressure Ptotal of exhaust gas in the vicinity of the EGR valve 42 estimated in step S101 is multiplied by the volume ratio Rw to estimate the partial pressure Pw of water in exhaust gas in the EGR passage 41 in the vicinity of the EGR valve 42. That is, the partial pressure Pw of water in exhaust gas is estimated as a larger value as the volume ratio Rw of water in exhaust gas increases. Thereafter, the temperature Tw of exhaust gas in the vicinity of the EGR valve 42 is estimated (step S103). Here, the temperature Tw of exhaust gas in the EGR passage 41 in the vicinity of the EGR valve 42 is estimated on the basis of the temperature Tex of exhaust gas. Note that, in the present embodiment, it is assumed that the vicinity of the EGR valve 42 is the inside of the EGR valve 42 in the EGR passage 41.

In this way, as the pressure Ptotal of exhaust gas in the vicinity of the EGR valve 42, the partial pressure Pw of water in exhaust gas and the temperature Tw of exhaust gas are estimated, and then the phase of water in the vicinity of the EGR valve 42 is derived on the basis of the map shown in FIG. 3 (step S104). Here, the temperature Tw of exhaust gas in the vicinity of the EGR valve 42 is used as the temperature Tw of water. In addition, when the partial pressure Pw of water exceeds a saturated vapor pressure Ps(Tw) at the temperature Tw of exhaust gas, it is estimated that liquid-phase water is adherent to the EGR valve 42. Subsequently, it is determined whether water in the vicinity of the EGR valve 42 is in a liquid phase (step S105). When it is consequently determined that water in the vicinity of the EGR valve 42 is not in a liquid phase (NO in step S105), that is, when it is determined that no liquid-phase water is adherent to the EGR valve 42, the amount Vw of adherent liquid moisture is then set at "0" (step S108), and the series of processes once ends.

On the other hand, when it is determined that water in the vicinity of the EGR valve 42 is in a liquid phase (YES in step S105), that is, when it is determined that liquid-phase water is adherent to the EGR valve 42, the EGR flow rate at that time is estimated subsequently. Here, the EGR flow rate is estimated on the basis of the intake air flow rate GA, the intake pipe pressure PIM, the exhaust gas pressure Pex and the target EGR opening degree of the EGR valve 42 by referring to the map obtained through experiment in advance. Then, after that, the amount Vw of adherent liquid moisture is calculated on the basis of the estimated EGR flow rate (step S107), and then the series of processes once ends. Here, the amount Vw of adherent liquid moisture is calculated as a larger value as the EGR flow rate increases.

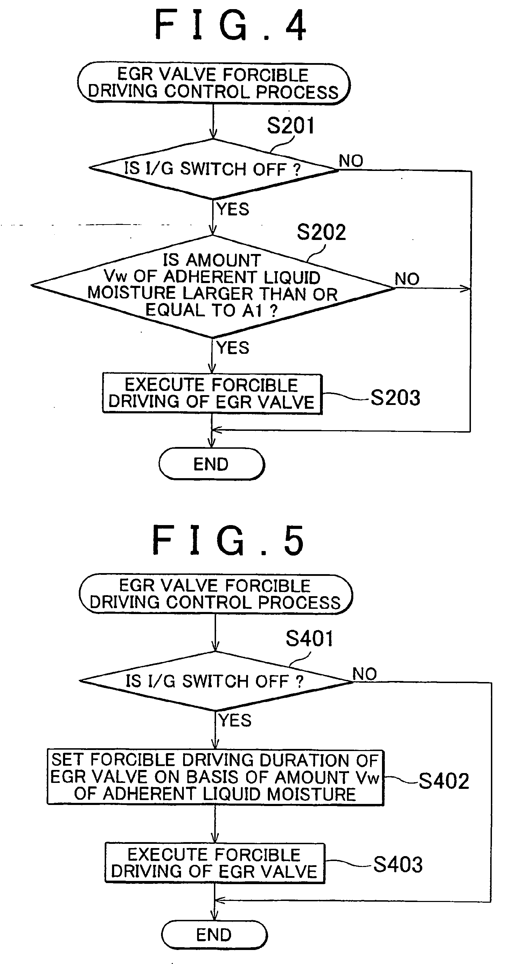

Next, forcible driving control over the EGR valve 42 according to the present embodiment will be described with reference to FIG. 4. FIG. 4 is a flowchart that shows the procedure of forcible driving control over the EGR valve 42. A series of processes shown in the flowchart are repeatedly executed by the electronic control unit 60.

As shown in the drawing, in this process, first, it is determined whether the I/G switch is "OFF" (step S201). Here, when the I/G switch is "ON" (NO in step S201), it is determined that it is not the timing at which forcible driving control over the EGR valve 42 is executed, and the series of processes once ends.

On the other hand, when the I/G switch is "OFF" (YES in step S201), it is subsequently determined whether the amount Vw of adherent liquid moisture calculated in the above liquid moisture adhesion calculation control is larger than or equal to a predetermined value A1 (step S202). Then, as a result, when the amount Vw of adherent liquid moisture is larger than or equal to the predetermined value A1 (YES in step S202), forcible driving of the EGR valve 42 is then executed, and the series of processes once ends.

On the other hand, when the amount Vw of adherent liquid moisture is not larger than or equal to the predetermined value A1 (NO in step S202), forcible driving of the EGR valve 42 is not executed, that is, execution of forcible driving process of the EGR valve 42 is prohibited, and then the series of processes once ends.

With the above described control unit for an internal combustion engine according to the present embodiment, the following functions and advantageous effects may be obtained.
(1) The electronic control unit 60 estimates whether liquid-phase water is adherent to the EGR valve 42 on the basis of the engine operating state. Then, when the electronic control unit 60 estimates that liquid-phase water is adherent to the EGR valve 42 at the time of stop of engine operation, the EGR valve 42 is forcibly opened and closed. In this way, at the time of stop of engine operation, forcible driving process of the EGR valve 42 is not always executed but forcible driving process of the EGR valve 42 is executed when it is estimated that liquid-phase water is adherent to the EGR valve 42. This prevents forcible driving process of the EGR valve 42 from being unnecessarily executed. Thus, it is possible to accurately suppress freezing and sticking of the EGR valve 42.

(2) The electronic control unit 60 estimates the partial pressure Pw of water in the vicinity of the EGR valve 42 and the temperature Tw in the vicinity of the EGR valve 42. Then, the electronic control unit 60 estimates that liquid-phase water is adherent to the EGR valve 42 when the partial pressure Pw of water exceeds the saturated vapor pressure Ps(Tw) at the temperature Tw. By so doing, it is possible to accurately estimate whether liquid-phase water is adherent to the EGR valve 42, and it is possible to accurately prevent freezing and sticking of the EGR valve 42.

(3) When the electronic control unit 60 estimates that liquid-phase water is adherent to the EGR valve 42, the electronic control unit 60 further estimates the amount Vw of adherent water on the basis of the engine operating state. Then, the electronic control unit 60 sets a mode, in which forcible driving process of the EGR valve 42 is executed, on the basis of the estimated amount Vw of adherent water. Specifically, when the estimated amount Vw of adherent water is smaller than or equal to the predetermined amount A1, the electronic control unit 60 prohibits execution of forcible driving process of the EGR valve 42. In this way, when it is estimated that liquid-phase water is present in the vicinity of the EGR valve 42, forcible driving process of the EGR valve 42 is not executed only by this fact, but forcible driving process of the EGR valve 42 is executed when the amount Vw of adherent water in the EGR valve 42 is larger than or equal to the predetermined amount A1. This can further prevent forcible driving process of the EGR valve 42 from being unnecessarily executed. Thus, it is possible to further accurately prevent freezing and sticking of the EGR valve 42.

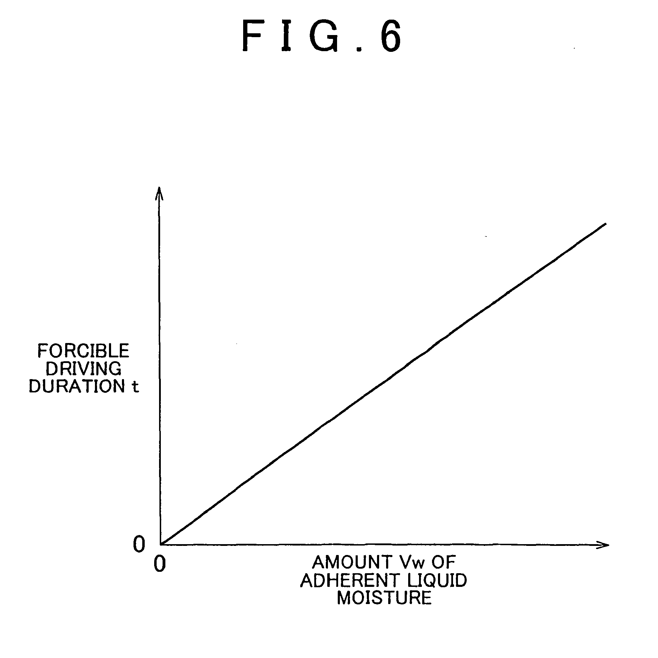

[Second Embodiment] Hereinafter, a control unit for an internal combustion engine according to a second embodiment of the invention will be described with reference to FIG. 5 and FIG. 6 by focusing on the difference from the first embodiment.

When liquid-phase water is adherent to the EGR valve 42, it is more difficult to reduce the amount of adherent water as the amount of adherent water increases. Then, in the present embodiment, by extending the forcible driving duration t of the EGR valve 42 as the amount Vw of adherent liquid moisture increases, a mode in which forcible driving process of the EGR valve 42 is executed is accurately set on the basis of the amount Vw of adherent liquid moisture.

Next, forcible driving control over the EGR valve 42 according to the present embodiment will be described with reference to FIG. 5 and FIG. 6. FIG. 5 is a flowchart that shows the procedure of forcible driving control over the EGR valve 42. A series of processes shown in the flowchart are repeatedly executed by the electronic control unit 60. In addition, FIG. 6 is a map that defines the relationship between an amount Vw of adherent liquid moisture and a forcible driving duration t of the EGR valve 42.

As shown in FIG. 5, in this process, first, it is determined whether the I/G switch is "OFF" (step S401). Here, when the I/G switch is "ON" (NO in step S401), it is determined that it is not the timing at which forcible driving control over the EGR valve 42 is executed, and the series of processes once ends.

On the other hand, when the I/G switch is "OFF" (YES in step S401), the forcible driving duration t of the EGR valve 42 is subsequently set by referring to the map shown in FIG. 6 (step S402). Here, the forcible driving duration t is set at "0" when the amount Vw of adherent liquid moisture is "0", and the forcible driving duration t of the EGR valve 42 is increased as the amount Vw of adherent liquid moisture increases. When the forcible driving duration t of the EGR valve 42 is thus set, forcible driving of the EGR valve 42 is then executed over the forcible driving duration t (step S403), and then the series of processes once end.

With the above described control unit for an internal combustion engine according to the present embodiment, the following functions and advantageous effects may be obtained. (1) The electronic control unit 60 increases the forcible driving duration t of the EGR valve 42 as the amount Vw of adherent liquid moisture increases. By so doing, it is possible to accurately set a mode, in which forcible driving process of the EGR valve 42 is executed, on the basis of the amount of water adherent to the EGR valve 42, and it is possible to further accurately prevent freezing and sticking of the EGR valve 42.

Note that the control unit for an internal combustion engine is not limited to the configuration illustrated in the above embodiments; it may be modified into the following alternative embodiment where necessary. In the above embodiments, the EGR valve 42 is driven by the step motor 43; however, an actuator for driving the EGR valve is not limited to the step motor 43. The actuator for driving the EGR valve may be another actuator, such as a DC motor.

In the above embodiments, the internal combustion engine 10 includes the poppet EGR valve 42; however, the EGR valve of the internal combustion engine according to the aspect of the invention is not limited to a poppet type. The aspect of the invention may be applied to, for example, an internal combustion engine that includes a butterfly EGR valve.

In the second embodiment, the forcible driving duration t of the EGR valve is increased as the amount Vw of adherent liquid moisture is large. Instead, it is also applicable that the forcible driving speed of the EGR valve is increased as the amount Vw of adherent liquid moisture increases. In this case as well, similar advantageous effects to those of the second embodiment may be obtained. In addition, it is also applicable that the forcible driving duration t of the EGR valve is increased and the forcible driving speed of the EGR valve is increased as the amount Vw of adherent liquid moisture increases. By so doing, it is possible to further accurately prevent freezing and sticking of the EGR valve.

As in the case of the above embodiments, it is desirable to set a mode, in which the forcible driving process of the EGR valve is executed, on the basis of the amount Vw of adherent liquid moisture in terms of accurately setting a mode, in which the forcible driving process of the EGR valve is executed, on the basis of the amount of water adherent to the EGR valve. However, reduction process execution means according to the aspect of the invention is not limited to this configuration. Instead, the reduction process execution may not include the configuration for estimating the amount Vw of adherent liquid moisture and the configuration for setting a mode, in which the forcible driving process of the EGR valve is executed, on the basis of the amount Vw of adherent liquid moisture. In this case as well, it is possible to prevent the forcible driving process of the EGR valve from being unnecessarily executed to some extent.

In the above embodiments, the partial pressure Pw and temperature Tw of water inside the EGR valve are estimated; however, the vicinity of the EGR valve according to the aspect of the invention is not limited to the inside of the EGR valve 42. In short, when it is possible to estimate that liquid-phase water is adherent to the EGR valve 42, the vicinity of the EGR valve may be the outside of the EGR valve 42 in the EGR passage 41.

In the above embodiments, the pressure Ptotal of exhaust gas in the vicinity of the EGR valve is estimated, the volume ratio Rw of water in exhaust gas is estimated on the basis of the intake air flow rate GA and the fuel injection flow rate Q, and then the partial pressure Pw of water in the vicinity of the EGR valve is estimated on the basis of the pressure Ptotal of exhaust gas and the volume ratio Rw of water. However, a mode of estimating the partial pressure Pw of water is not limited to this configuration; instead, the configuration may be selectively modified so as to be able to estimate the partial pressure Pw of water.

In the above embodiments, at the time of stop of engine operation, the EGR valve is forcibly opened and closed; however, reduction process execution means according to the aspect of the invention is not limited to this configuration. For example, the reduction process execution means may be a heater, or the like, that heats the EGR valve. In short, it is only necessary that the reduction process execution means executes process for reducing the amount of water adherent to the EGR valve.

In the above embodiments, the partial pressure Pw of water in the vicinity of the EGR valve 42 and the temperature Tw in the vicinity of the EGR valve 42 are estimated, and then it is estimated that liquid-phase water is adherent to the EGR valve 42 when the partial pressure Pw of water exceeds the saturated vapor pressure Ps(Tw) at the temperature Tw. However, estimating means according to the aspect of the invention is not limited to this configuration. For example, when the vehicle is stopped for a long period of time at a relatively low ambient temperature Tamb, liquid-phase water may adhere to the EGR valve 42 if the engine operation is stopped directly. Then, when the ambient temperature Tamb is lower than a predetermined temperature, it may be estimated that liquid-phase water is adherent to the EGR valve 42 on the fact that the vehicle is stopped, that is, the internal combustion engine 10 is placed in idle operation state, over a predetermined period or longer.

Ultimately, it is only necessary that the estimating means estimates whether liquid-phase water is adherent to the EGR valve on the basis of the engine operating state. In addition, the process for reducing the amount of water adherent to the EGR valve may be executed on the basis of the engine operating state prior to stop of engine operation. That is, it is applicable to change whether to execute the process or an execution mode, such as and how to execute the process, on the basis of the engine operating state.

## Claims

1. A control unit for an internal combustion engine that includes an EGR system (40) formed of an EGR passage (41) for introducing exhaust gas from an exhaust passage (30) into an intake passage (20) and an EGR valve (42) that is provided in the EGR passage and that is able to vary the flow passage area of exhaust gas, the control unit including reduction process execution means (60) that executes reduction process for reducing an amount of water adherent to the EGR valve (42) at the time of stop of engine operation, **characterized in that**:
the reduction process is executed on the basis of an engine operating state prior to stop of engine operation.

2. The control unit for an internal combustion engine according to claim 1, further comprising:
estimating means (60) that estimates whether liquid-phase water is adherent to the EGR valve (42) on the basis of the engine operating state, wherein
the reduction process execution means (60) executes the reduction process when the estimating means (60) estimates that liquid-phase water is adherent to the EGR valve (42).

3. The control unit for an internal combustion engine according to claim 2, wherein
the estimating means (60) estimates a partial pressure of water in the vicinity of the EGR valve (42) and a temperature in the vicinity of the EGR valve (42), and estimates that liquid-phase water is adherent to the EGR valve (42) when the partial pressure of water exceeds a saturated vapor pressure at the estimated temperature.

4. The control unit for an internal combustion engine according to claim 3, wherein
the estimating means (60) estimates a pressure of exhaust gas in the vicinity of the EGR valve (42), estimates a volume ratio of water in exhaust gas on the basis of an intake air flow rate and fuel injection flow rate of the internal combustion engine (10), and estimates the partial pressure of water in the vicinity of the EGR valve (42) on the basis of the pressure of exhaust gas and the volume ratio of water in the exhaust gas.

5. The control unit for an internal combustion engine according to any one of claims 2 to 4, wherein
when the estimating means (60) estimates that liquid-phase water is adherent to the EGR valve (42), the estimating means (60) further estimates the amount of the adherent water on the basis of the engine operating state,
the reduction process execution means (60) sets an execution mode of the reduction process on the basis of the amount of the adherent water estimated by the estimating means (60).

6. The control unit for an internal combustion engine according to claim 5, wherein
the estimating means (60) estimates a flow rate of exhaust gas introduced into the intake passage (20) through the EGR valve (42), and estimates that the amount of the adherent water is larger as the flow rate of exhaust gas increases.

7. The control unit for an internal combustion engine according to claim 5 or 6, wherein
when the amount of the adherent water estimated by the estimating means (60) is smaller than a predetermined amount, the reduction process execution means (60) prohibits execution of the reduction process.

8. The control unit for an internal combustion engine according to any one of claims 5 to 7, wherein
the reduction process execution means (60) forcibly opens and closes the EGR valve (42), and increases a forcible driving duration of the EGR valve as the amount of the adherent water estimated by the estimating means (60) increases.

9. The control unit for an internal combustion engine according to any one of claims 5 to 8, wherein
the reduction process execution means (60) forcibly opens and closes the EGR valve (42), and increases a forcible driving speed of the EGR valve (42) as the amount of the adherent water estimated by the estimating means (60) increases.

10. The control unit for an internal combustion engine according to claim 1, wherein
an execution mode of the reduction process is changed on the basis of the engine operating state prior to stop of the engine operation.

11. The control unit for an internal combustion engine according to claim 1, wherein
execution of the reduction process is prohibited on the basis of the engine operating state prior to stop of the engine operation.

## Patentansprüche

1. Steuereinheit für eine Verbrennungskraftmaschine mit einem AGR-System (40), umfassend einen AGR-Kanal (41) zum Einleiten von Abgas aus einem Ausstoßkanal (30) in einen Ansaugkanal (20), und einem AGR-Ventil (42), das in dem AGR-Kanal vorgesehen ist und den Strömungskanalbereich des Abgases verändern kann, wobei die Steuereinheit ein den Verkleinerungsvorgang ausführendes Mittel (60) umfaßt, das den Verkleinerungsvorgang zum Verkleinern der Wassermenge ausführt, die zum Zeitpunkt des Stopps des Motorbetriebs an dem AGR-Ventil (42) haftet, **dadurch gekennzeichnet, daß**:
der Verkleinerungsvorgang auf der Basis eines Motorbetriebszustands vor dem Stopp des Motorbetriebs erfolgt.

2. Steuereinheit für eine Verbrennungskraftmaschine nach Anspruch 1, außerdem umfassend:
ein Schätzmittel (60), das auf Basis des Motorbetriebszustands schätzt, ob Wasser in flüssiger Phase an dem AGR-Ventil (42) haftet, wobei
das den Verkleinerungsvorgang ausführende Mittel (60) den Verkleinerungsvorgang ausführt, wenn das Schätzmittel (60) schätzt, daß an dem AGR-Ventil (42) Wasser in flüssiger Phase haftet.

3. Steuereinheit für eine Verbrennungskraftmaschine nach Anspruch 2, wobei
das Schätzmittel (60) einen Partialdruck des Wassers in der Nähe des AGR-Ventils (42) und eine Temperatur in der Nähe des AGR-Ventils (42) schätzt und einschätzt, daß Wasser in flüssiger Phase an dem AGR-Ventil (42) haftet, wenn der Partialdruck des Wassers höher ist als ein gesättigter Dampfdruck bei der geschätzten Temperatur.

4. Steuereinheit für eine Verbrennungskraftmaschine nach Anspruch 3, wobei
das Schätzmittel (60) einen Druck des Abgases in der Nähe des AGR-Ventils (42) schätzt, ein Mengenverhältnis des Wassers in dem Abgas auf der Basis einer Ansaugluft-Strömungsmenge und einer Kraftstoffeinspritz-Strömungsmenge der Verbrennungskraftmaschine (10) schätzt und den Partialdruck des Wassers in der Nähe des AGR-Ventils (42) auf der Basis des Drucks des Abgases und des Mengenverhältnisses des Wassers in dem Abgas schätzt.

5. Steuereinheit für eine Verbrennungskraftmaschine nach einem der Ansprüche 2 bis 4, wobei,
wenn das Schätzmittel (60) einschätzt, daß Wasser in flüssiger Phase an dem AGR-Ventil (42) haftet, das Schätzmittel (60) außerdem die Menge des anhaftenden Wassers auf der Basis des Motorbetriebszustands schätzt und
das den Verkleinerungsvorgang ausführende Mittel (60) eine Ausführungsart des Verkleinerungsvorgangs auf der Basis der von dem Schätzmittel (60) geschätzten Menge des anhaftenden Wassers festlegt.

6. Steuereinheit für eine Verbrennungskraftmaschine nach Anspruch 5, wobei
das Schätzmittel (60) eine Strömungsmenge des durch das AGR-Ventil (42) hindurch in den Ansaugkanal (20) eingeleiteten Abgases schätzt und einschätzt, daß die Menge des anhaftenden Wassers größer ist, wenn die Abgasmenge zunimmt.

7. Steuereinheit für eine Verbrennungskraftmaschine nach Anspruch 5 oder 6, wobei,
wenn die von dem Schätzmittel (60) geschätzte Menge des anhaftenden Wassers kleiner ist als eine vorgegebene Menge, das den Verkleinerungsvorgang ausführende Mittel (60) die Ausführung des Verkleinerungsvorgangs unterbindet.

8. Steuereinheit für eine Verbrennungskraftmaschine nach einem der Ansprüche 5 bis 7, wobei
das den Verkleinerungsvorgang ausführende Mittel (60) das AGR-Ventil (42) zwangsweise öffnet und schließt und eine Zwangsdauer des Ansteuerns des AGR-Ventils (42) vergrößert, wenn die von dem Schätzmittel (60) geschätzte Menge des anhaftenden Wassers zunimmt.

9. Steuereinheit für eine Verbrennungskraftmaschine nach einem der Ansprüche 5 bis 8, wobei
das den Verkleinerungsvorgang ausführende Mittel (60) das AGR-Ventil (42) zwangsweise öffnet und schließt und eine Zwangsgeschwindigkeit des Ansteuerns des AGR-Ventils (42) vergrößert, wenn die von dem Schätzmittel (60) geschätzte Menge des anhaftenden Wassers zunimmt.

10. Steuereinheit für eine Verbrennungskraftmaschine nach Anspruch 1, wobei
eine Ausführungsart des Verkleinerungsvorgangs auf der Basis des Motorbetriebszustands vor dem Stopp des Motorbetriebs geändert wird.

11. Steuereinheit für eine Verbrennungskraftmaschine nach Anspruch 1, wobei
die Ausführung des Verkleinerungsvorgangs auf der Basis des Motorbetriebszustands vor dem Stopp des Motorbetriebs unterbunden wird.

## Revendications

1. Unité de commande pour un moteur à combustion interne qui comprend un système de recyclage de gaz d'échappement (40) composé d'un passage de recyclage de gaz d'échappement (41) pour l'introduction de gaz d'échappement d'un passage d'échappement (30) dans un passage d'admission (20) et d'une soupape de recyclage de gaz d'échappement (42) qui est prévue dans le passage de recyclage de gaz d'échappement et qui est capable de modifier la section de passage d'écoulement de gaz d'échappement, l'unité de commande comprenant des moyens d'exécution de processus de réduction (60) qui exécutent un processus de réduction afin de réduire une quantité d'eau adhérant à la soupape de recyclage de gaz d'échappement (42) au moment de l'arrêt du fonctionnement du moteur, **caractérisée en ce que** :
le processus de réduction est exécuté sur la base d'un état de fonctionnement du moteur avant l'arrêt du fonctionnement du moteur.

2. Unité de commande pour un moteur à combustion interne selon la revendication 1, comportant en outre :
des moyens d'estimation (60) qui estiment si de l'eau en phase liquide adhère à la soupape de recyclage de gaz d'échappement (42) sur la base de l'état de fonctionnement du moteur, et dans laquelle
les moyens d'exécution de processus de réduction (60) exécutent le processus de réduction quand les moyens d'estimation (60) estiment que de l'eau en phase liquide adhère à la soupape de recyclage de gaz d'échappement (42).

3. Unité de commande pour un moteur à combustion interne selon la revendication 2, dans laquelle
les moyens d'estimation (60) estiment une pression partielle d'eau au voisinage de la soupape de recyclage de gaz d'échappement (42) et une température au voisinage de la soupape de recyclage de gaz d'échappement (42), et estiment que de l'eau en phase liquide adhère à la soupape de recyclage de gaz d'échappement (42) quand la pression partielle d'eau dépasse une pression de vapeur saturée à la température estimée.

4. Unité de commande pour un moteur à combustion interne selon la revendication 3, dans laquelle
les moyens d'estimation (60) estiment une pression de gaz d'échappement au voisinage de la soupape de recyclage de gaz d'échappement (42), estiment un rapport volumique de l'eau dans le gaz d'échappement sur la base d'un débit d'air d'admission et d'un débit d'injection de carburant du moteur à combustion interne (10), et estiment la pression partielle d'eau au voisinage de la soupape de recyclage de gaz d'échappement (42) sur la base de la pression de gaz d'échappement et du rapport volumique de l'eau dans le gaz d'échappement.

5. Unité de commande pour un moteur à combustion interne selon l'une quelconque des revendications 2 à 4, dans laquelle
quand les moyens d'estimation (60) estiment que de l'eau en phase liquide adhère à la soupape de recyclage de gaz d'échappement (42), les moyens d'estimation (60) estiment en outre la quantité de l'eau adhérente sur la base de l'état de fonctionnement du moteur,
les moyens d'exécution de processus de réduction (60) établissent un mode d'exécution du processus de réduction sur la base de la quantité de l'eau adhérente estimée par les moyens de estimation (60).

6. Unité de commande pour un moteur à combustion interne selon la revendication 5, dans laquelle
les moyens d'estimation (60) estiment un débit de gaz d'échappement introduit dans le passage d'admission (20) par l'intermédiaire de la soupape de recyclage de gaz d'échappement (42), et estiment que la quantité de l'eau adhérente est plus grande lorsque le débit du gaz d'échappement augmente.

7. Unité de commande pour un moteur à combustion interne selon la revendication 5 ou 6, dans laquelle
quand la quantité de l'eau adhérente estimée par les moyens de estimation (60) est plus petite qu'une quantité prédéterminée, les moyens d'exécution de processus de réduction (60) empêchent l'exécution du processus de réduction.

8. Unité de commande pour un moteur à combustion interne selon l'une quelconque des revendications 5 à 7, dans laquelle
les moyens d'exécution de processus de réduction (60) ouvrent et ferment de manière forcée la soupape de recyclage de gaz d'échappement (42), et augmentent une durée d'entraînement forcée de la soupape de recyclage de gaz d'échappement lorsque la quantité de l'eau adhérente estimée par les moyens d'estimation (60) augmente.

9. Unité de commande pour un moteur à combustion interne selon l'une quelconque des revendications 5 à 8, dans laquelle
les moyens d'exécution de processus de réduction (60) ouvrent et ferment de manière forcée la soupape de recyclage de gaz d'échappement (42), et augmentent une vitesse d'entraînement forcée de la soupape de recyclage de gaz d'échappement (42) lorsque la quantité de l'eau adhérente estimée par les moyens d'estimation (60) augmente.

10. Unité de commande pour un moteur à combustion interne selon la revendication 1, dans laquelle
un mode d'exécution du processus de réduction est changé sur la base de l'état de fonctionnement du moteur avant l'arrêt du fonctionnement du moteur.

11. Unité de commande pour un moteur à combustion interne selon la revendication 1, dans laquelle
l'exécution du processus de réduction est interdite sur la base de l'état de fonctionnement du moteur avant l'arrêt du fonctionnement du moteur.
